Europäisches Patentamt

European Patent Office

Office européen des brevets

(19)

(11) Veröffentlichungsnummer: **0 238 521**
**B1**

(12) **EUROPÄISCHE PATENTSCHRIFT**

(45) Veröffentlichungstag der Patentschrift: **27.12.90**

(51) Int. Cl.⁵: **F 16 H 47/04**

(21) Anmeldenummer: **86905224.1**

(22) Anmeldetag: **17.09.86**

(86) Internationale Anmeldenummer:
**PCT/DE86/00370**

(87) Internationale Veröffentlichungsnummer:
**WO 87/01782 26.03.87 Gazette 87/07**

(54) STUFENLOSES HYDROMECHANISCHES VERZWEIGUNGSGETRIEBE FÜR KRAFTFAHRZEUGE.

(30) Priorität: **18.09.85 DE 3533193**

(43) Veröffentlichungstag der Anmeldung:
**30.09.87 Patentblatt 87/40**

(45) Bekanntmachung des Hinweises auf die
Patenterteilung:
**27.12.90 Patentblatt 90/52**

(84) Benannte Vertragsstaaten:
**FR GB IT SE**

(56) Entgegenhaltungen:
**EP-A-0 081 696**
**FR-A-2 412 760**
**FR-A-2 444 204**
**GB-A-2 049 843**
**US-A-4 232 568**

(73) Patentinhaber: **Meyerle, Michael**
**Kiefernweg 9**
**D-7996 Meckenbeuren-Lochbrücke (DE)**

(72) Erfinder: **Meyerle, Michael**
**Kiefernweg 9**
**D-7996 Meckenbeuren-Lochbrücke (DE)**

(74) Vertreter: **Münich, Wilhelm, Dr. et al**
**Kanzlei Münich, Steinmann, Schiller**
**Willibaldstrasse 36/38**
**D-8000 München 21 (DE)**

## Beschreibung

Die Erfindung bezieht sich auf ein stufenloses hydrostatisch-mechanisches Verzweigungsgetriebe für Kraftfahrzeuge, jeweils nach dem Oberbegriff der Ansprüche 1 und 2.

Aus der EP—A—81 696 (=DE—A—3 147 447) ist ein hydrostatischmechanisches Stellkoppelgetriebe mit eingangsseitiger Leistungsverzweigung bekannt, das ein vierwelliges Summierungsplanetengetriebe besitzt, dessen beide Ausgangswellen mit mehreren Stirnradstufen und einer Vorgelegewelle zum Schalten von mehreren Fahrbereichen zusammenarbeitet. Als Anfahreinrichtung dient eine Anfahrkupplung, die am Getriebeeingang zwischen Motor und Getriebe angeordnet ist.

Der Erfindung liegt die Aufgabe zugrunde, ein hydrostatischmechanisches Verzweigungsgetriebe ohne Vorgelegewelle zu schaffen, um vielfältige Anwendungs- und Anpassungsmöglichkeiten an verschiedene fahrzeugspezifische Bedingungen zu erhalten. Ferner sollen günstige Voraussetzungen für die Modulbauweise einzelner Baugruppen gegeben sein.

Diese Aufgabe wird erfindungsgemäß nach der lehne des Anspruchs 1, bzw 2.

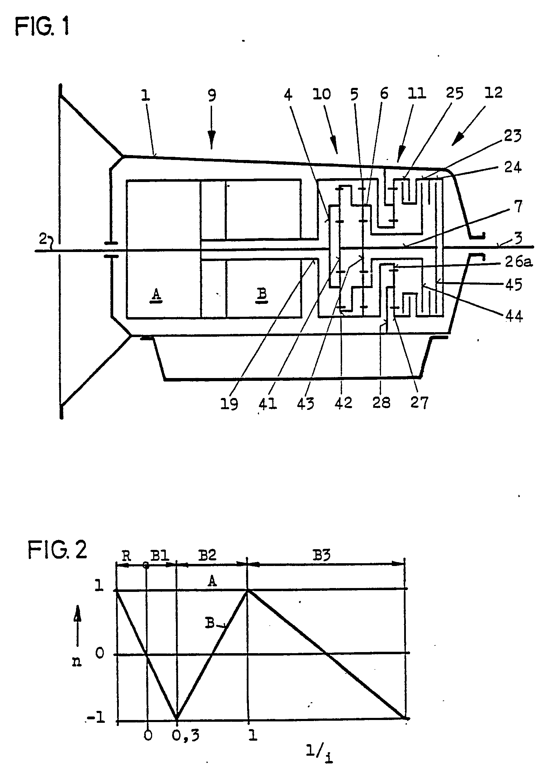

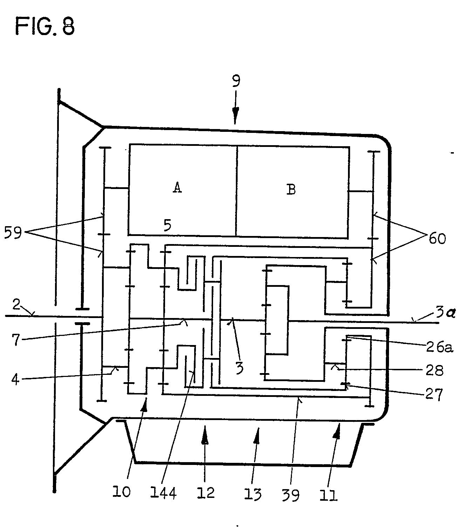

Alle Ausführungsbeispiele Figur 1 bis Figur 10 beruhen auf gleichem Grundsystem. Mit den Grundbaueinheiten—Hydrostatpaket 9. Summierungsplanetengetriebe 10; 110; 210 und zweites Planetengetriebe 11; 111 lassen sich verschiedene Getriebekombinationen verwirklichen. Diese Grundbaueinheiten stehen alle miteinander in ständiger Verbindung. Die Kupplungen 12; 112 verbinden die Abtriebswelle je nach geschaltetem Bereich mit einer der Wellen des Summierungsplanetengetriebes 10 bzw. 110; 210, oder einer Welle des zweiten Planetengetriebes 11; 111.

Fahrzeuggerechte Anpaßbarkeit an verschiedene fahrzeugspezifische Bedingungen ist bei meist gleichbleibenden Hydrostatbausteinen sowohl hinsichtlich der geforderten Leitstungsfähigkeit als auch im Hinblick auf die Einbaubedingungen auf ein weitreichendes Maß gegeben. In der nachfolgenden Figurenbeschreibung werden die entsprechenden Maßnahmen erläutert. Es zeigen

Fig. 1 ein Ausführungsbeispiel mit drei Vorwärtsfahrbereichen, wobei der Rückwärtsbereich und der erste Vorwärtsfahrbereich rein hydrostatisch und der zweite und dritte Fahrbereich hydromechanisch arbeiten.

Fig. 2 den Drehzahlplan zum Ausführungsbeispiel nach Figur 1.

Fig. 3 ein Ausführungsbeispiel mit zwei hydromechanischen Vorwärtsfahrbereiche und einem hydromechanischen Rückwärtsbereich.

Fig. 4 den Drehzahlplan zum Ausführungsbeispiel nach Figur 3.

Fig. 5 einen Drehzahlplan zum Ausführungsbeispiel nach Figur 3 jedoch mit gespreiztem ersten Vorwärtsfahrbereich und gespreiztem Rückwärtsbereich.

Fig. 5a ein Ausführungsbeispiel des Summierungsplanetengetriebes insbesondere für eine Getriebeausführung mit gespreiztem ersten Vorwärtsfahrbereich und gespreiztem Rückwärtsbereich.

Fig. 6 ein Ausführungsbeispiel des Getriebes für Querbauweise insbesondere für PKW-Anwendung.

Fig. 7 ein Ausführungsbeispiel mit parallel achsversetzt angeordneten Baueinheiten z.B. für Anwendung in Schwerkraftfahrzeugen.

Fig. 8 ein Ausführungsbeispiel mit koaxialer Anordnung der Verzweigungsgetriebekomponenten und achsversetzt parallel angeordnetem Hydrostatgetriebe 9.

Fig. 9 ein Ausführungsbeispiel mit achsversetzt zur Antriebswelle angeordneten Baueinheiten, insbesondere für Schwerkraftfahrzeuge.

Fig. 10 ein Ausführungs- und Anordnungsbeispiel der Verzweigungsgetriebekomponenten—Summierungsplanetengetriebe 10, Kupplungspaket 12 und zweitem Planetengetriebe 111.

Das Ausführungsbeispiel nach Figur 1 stellt ein Getriebe mit koaxialer Anordnung aller Baueinheiten—Hydrostatgetriebe, Summierungsplanetengetriebe 10, zweitem Planetengetriebe 11 und die abtriebsseitig angeordneten Kupplungen 12—dar. Dieses Getriebe besitzt drei Vorwärtsfahrbereiche, wobei der erste und der Rückwärtsbereich rein hydrostatisch arbeiten. Im ersten Fahrbereich wird die Leistung über die zweite Hydrostateinheit B direkt auf das Sonnenrad 26a des zweiten Planetengetriebes 11 und dessen Hohlrad 27 über die geschlossene Kupplung 25 auf die Abtriebswelle 3 übertragen.

Im zweiten und dritten Fahrbereich wird die Leistung am Getriebeeingang aufgeteilt in einen hydraulischen und einen mechanischen Leistungszweig. Die mechanische Leistung fließt über den Steg 4 und die hydraulische Leistung über die erste Hydrostateinheit A verstellbaren Volumens auf die zweite Hydrostateinheit B vorzugsweise konstanten Volumens, auf das Hohlrad 5 des Summierungsplanetengetriebes 10. Im zweiten Fahrbereich werden die hydraulische und die mechanische Leistung am Steg 6 summiert und fließen gemeinsam über die geschlossene Kupplung 23 auf die Abtriebswelle 3. Im zweiten Fahrbereich wird die im Summierungsplanetengetriebe aufsummierte Leistung über die Welle 7 bei geschlossener Kupplung 24 auf die Abtriebswelle 3 übertragen.

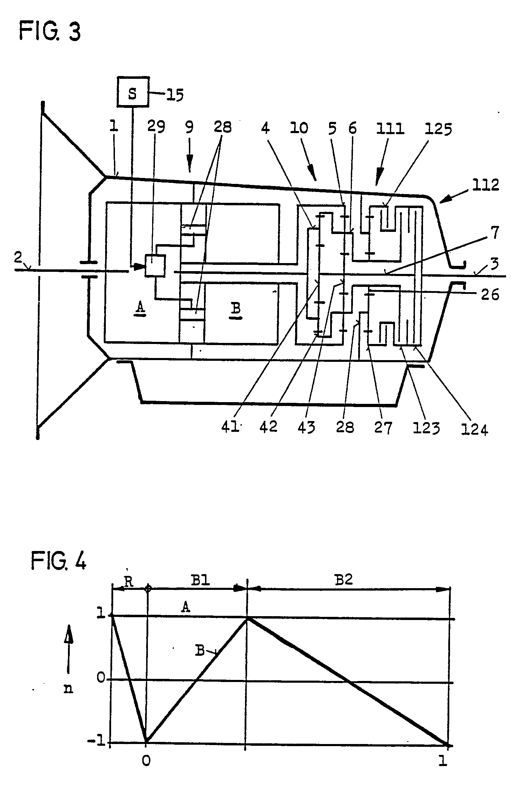

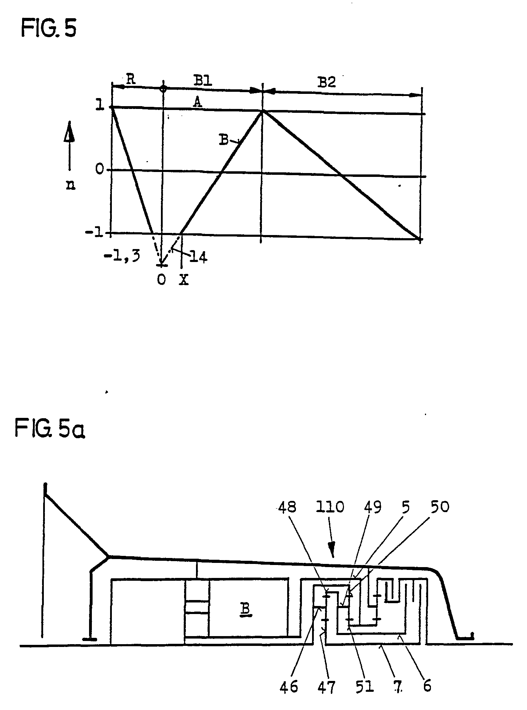

Das Ausführungsbeispiel nach Figur 3 unterscheidet sich im wesentlichen von der Ausführung 1 dadurch, daß die Leistung über alle Schaltbereiche rein hydromechanisch übertragen wird und nicht drei sondern zwei Vorwärtsfahrbereiche vorhanden sind. Der Leistungsfluß entspricht dem der Ausführung nach Figur 1 innerhalb der beiden hydromechanischen Fahrbereiche. Bei Auslegung des Getriebes bzw. des Summierungsplanetengetriebes 10, entsprechend dem Drehzahlplan nach Figur 4, ist am Anfahrzustand bei Fahrgeschwindigkeit "Null" der Hydrostat auf seine volle negative Verstellgröße ausgestellt. Ist das Summierungsplanetengetriebe 10 entsprechend dem Drehzahlplan nach Figur 5 ausgelegt, ist am Anfahrpunkt der Hydrostat ebenfalls auf volles maximales Verstellvolumen eingestellt, jedoch mit dem Unterschied, daß der Drehzahlbereich der zweiten Hydrostateinheit B gespreizt wird, d.h. daß die Hydrostateinheit B am Anfahrpunkt "Null" wesentlich größer ist, als die der ersmen Hydrostateinheit A trotz gleicher spezifischer Förder- bzw. Schluckvoluminas bei dieser Betriebssituation. Die zweite Hydrostateinheit B wird in diesem Betriebspunkt bei geschlossener erster Bereichskupplung 123 über das Hohlrad 5 des Summierungsplanetengetriebes angetrieben und arbeitet somit als Pumpe. Die von der Hydrostateinheit B dabei erzeugte Fördermenge ist größer als von der Hydrostateinheit A auf Grund der niedrigeren Drehzahl aufgenommen werden kann. Die Mehrförderung wird über ein zwischen die beiden Arbeitsdruckleitungen 28 des Hydrostatgetriebes 9 geschaltetes Bypaßventil 29 auf die Niederdruckseite bzw. Saugseite übertragen. Beim Anfahrvorgang wird dieses Bypaßventil 29 durch ein Signal S allmählich gesperrt, wodurch die Antriebswelle bereits zu einem gewissen Maß in Drehung gesetzt wird. Bei gesperrtem Bypaßventil haben beide Hydrostateinheiten A und B gleiche Drehzahlgröße, jedoch entgegengesetzte Drehrichtung, wie es der Drehzahlplan Figur 5 am Übersetzungspunkt X zeigt. Dies entspricht einer gewissen Mindestfahrgeschwindigkeit des Fahrzeugs z.B. der des ersten Ganges eines konventionellen Getriebes. Durch die Drehzahlspreizung der zweiten Hydrostateinheit B, die gemäß dem Drehzahlplan Figur 5, der Große-1,3 gegenüber Maximalgröße der Einheit A entspricht, wird eine beträchtliche Vergrößerung des Übersetzungs bzw. des Wandlungsbereichs des Getriebes erzielt.

In Figur 5a ist ein Summierungsplanetengetriebe 110 dargestellt, das es erlaubt, den Übersetzungspunkt X auf ca. ein Drittel der Übersetzungsgröße des gesamten ersten Bereichs zu erhöhen. Es ist auf diese Weise möglich, die Getriebeleistungskapazität bzw. die Getriebeeckleistung um bis zu 30% anzuheben. Außerdem ist ein sehr spontanes Beschleunigungsverhalten im untersten Geschwindigkeitsbereich, wie insbesondere bei PKWs von Vorteil, erzielbar. Die beiden Summierungsplanetengetriebeausführungen nach Figur 5a und Figur 3 bieten den Vorteil sehr kostengünstiger und rationeller Fertigung, insbesondere dadurch, daß jeweils die einzelnen Getriebeglieder—Hohlräder 48, 50 bzw. 42, 5 und 27 sowie auch Sonnenräder 47, 51 bzw. 41, 43, 26 mit jeweils gleichen Zähnezahlen ausgebildet werden können. Für niedrigere Bereichsspreizung ist das Summierungsplanetengetriebe 10 für höhere Bereichsspreizung das Summierungsplanetengetriebe 110 vorzuziehen.

Die beschriebene Bereichsspreizung erübrigt in vielen Anwendungsfällen, insbesondere im PKW-Bereich einen zusätzlichen Schaltbereich. Bei häufigem Betrieb im unteren Geschwindigkeitsbereich und hohen Zugkräften, wie Wohnwagenbetrieb im Gebirge, empfiehlt es sich jedoch, statt der Bereichsspreizung den ersten hydrostatischen Bereich gemäß Ausführung Figur 1 vorzuschalten, die stufenlose Regelung bis V—O ermöglicht.

Die Getriebeausführung nach Figur 3 zeichnet sich besonders dadurch aus, daß es sehr einfach im Aufbau ist, es wahlweise einfach mit und ohne Bereichsspreizung ausführbar ist, hohe Leistungsdichte besitzt, eine sehr fahrzeugfreundliche Bauform, insbesondere für heckangetriebene PKWs, erlaubt und allgemein kostengünstig, rationell und weitgehend risikofrei herstellbar ist. Desweiteren ist ein großer Rückwärtsbereich, wie bei PKWs gewohnt, gegeben.

Im obengenanntem kannten Getriebe EP—A—81696 (DE—C—31 47 447) wird diese Hydrostatdrehzahlspreizung bzw. Bereichsspreizung ebenfalls benutzt, jedoch mit dem Nachteil, daß eine Anfahrkupplung zur Überbrückung der Drehzahlspreizung der Hydrostateinheit B. bzw. der Bereichsspreizung bis zum Übersetzungspunkt X vorgesehen ist. Der Kosten- und Bauraumaufwand bei dieser bekannten Anfahreinrichtung ist jedoch sehr groß.

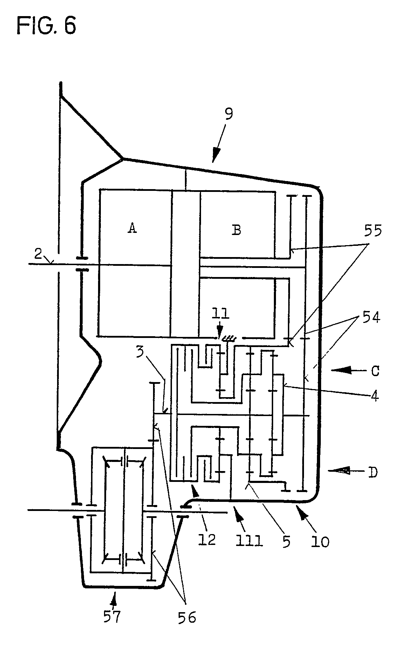

Die Ausführungsbeispiele nach Figur 6c, Figur 7, 8 und 9 sind im Getriebeprinzip identisch mit dem Ausführungsbeispiel nach Figur 1 und dem dazugehörigen Drehzahlplan Figur 2. Sie besitzen jeweils drei Vorwärtsfahrbereiche, wobei der erste Bereich und der Rückwärtsbereich rein hydrostatisch und der zweite und dritte Bereich, wie bereits beschrieben, hydromechanisch arbeiten. Für Fahrzeuge hoher Anfahrzugkräfte oder häufigen Betriebs im untersten Geschwindigkeitsbereich, was insbesondere für Schwerkraftfahrzeuge zutreffend ist, wie Busse, Nutzkraftfahrzeuge und Arbeitsmaschinen, ist diese Ausführung sehr vorteilhaft.

Ausführungsbeispiel nach Figur 6 zeigt das System in Zwei- und Dreibereichsausführung entsprechend den Drehzahlplänen nach Figur 2, 4 und 5. Dieses Getriebe entspricht den Einbaubedingungen eines frontangetriebenen PKWs mit quergelagertem Antriebsmotor. Die Verzweigungsgetriebekomponenten—Summierungsplanetengetriebe 10, zweiter Planetentrieb 11 bzw. 111 und das Kupplungspaket 12—sind hierbei achsparallel versetzt zur Antriebswelle und dem Hydrostatgetriebe 9 angeordnet. Über die beiden Stirnradstufen 54 und 55 wird die Antriebswelle 2 mit der ersten Welle des Summierungsplanetengetriebes Steg 4 und die zweite Hydrostateinheit B mit der zweiten Welle Hohlrad 5 des Summierungsplanetengetriebes verbunden. Im Gehäuse dieses Getriebes ist auch das Achsdifferential für den Vorderradantrieb vorgesehen, das über eine Stirnradstufe 56 mit der Abtriebswelle des Getriebes 3 verbunden ist. Bei dieser Anordnung der Getriebekomponenten ist es außerdem möglich, das Achsdifferential quer anzuordnen, z.B. für einen frontgetriebenen PKW mit längsangordnetem Antriebsmotor, wobei an Stelle der Stirnradstufe 56 die Triebverbindung durch einen nicht dargestellten Kegeltrieb hergestellt wird.

Bekannte stufenlose Getriebesysteme lassen eine derartige Flexibilität nicht zu oder zumindest nur unter sehr erschwerten Bedingungen.

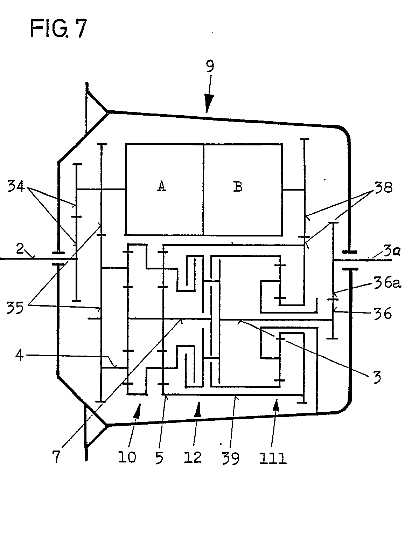

Im Ausführungsbeispiel nach Figur 7 sind die Getriebekomponenten—Hydrostatpaket 9 und die Verzweigungsgetriebeeinheiten, Summierungsplanetengetriebe 10, Kupplungspaket 12 und zweiter Planetentrieb 111—parallel zueinander achsversetzt angeordnet. Die Verzweigungsgetriebekomponenten—Summierungsplanetengetriebe 10, Kupplungspaket 12 und zweiter Planetentrieb 110—können bei dieser Getriebekombination zu einer Montageeinheit zusammengefaßt werden. Das Kupplungspaket 12 ist hierbei zwischen dem Summierungsplanetengetriebe 10 und dem zweiten Planetengetriebe 111 sehr vorteilhaft angeordnet, wobei die Kupplungsabtriebswelle 37 durch das zweite Planetengetriebe 111 führt und über eine Stirnradstufe 36, 36a mit der Abtriebswelle 3 verbunden ist. Das Summierungsplanetengetriebe 10 wird mit seiner ersten Welle Steg 4 über eine Stirnradstufe 35 direkt mit der ersten Hydrostateinheit A und über die Stirnradstufe 34 mit der Antriebswelle 2 verbunden. Die zweite Welle, Hohlrad 5 wird durch eine Hohlwelle 39 und einem Stirntrieb 38 mit der Abtriebswelle der zweiten Hydrostateinheit B gekoppelt. Die eingangsseitige Stirnradstufe 34 bietet die Möglichkeit einer beliebigen Drehzahlanpassung an verschiedene Drehzahlen des Antriebsmotors. Bei dieser Getriebekombination ist es desweiteren möglich, die Kupplungsabtriebswelle 37 gleichzeitig als, nicht dargestellte, Getriebeabtriebswelle auszubilden.

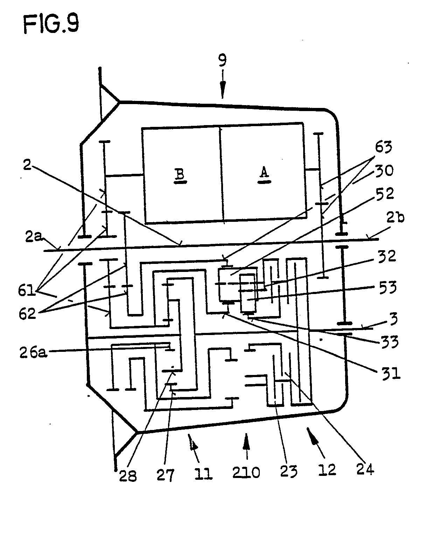

Die Getriebeausführung nach Figur 9 bietet den Vorteil, daß der Antrieb wahlweise über zwei gegenüberliegenden Wellenenden 2a oder 2b erfolgen kann. Es lassen sich dadurch besonders günstige fahrzeuggerechte, nicht dargestellte, Motorgetriebekombinationen verwirklichen, z.B. für den Busantrieb, bei dem der Motor vor oder hinter der Triebachse quer angeordnet ist, bietet sich die Möglichkeit, das Getriebe so auszubilden, daß die Getriebeabtriebswelle in der Nähe des Motorflansches rechtwinklig aus der Getriebegehäuse tritt und direkt in das Differential der Triebachse eintreiben kann. Dies wird derart verwirklicht (ist in den Zeichnungen nicht dargestellt), daß der Motor am Antriebswellenanschluß 2b anschließt und die Abtriebswelle 3, die hier an der Antriebsseite des Getriebes liegt, mit einem im Getriebe integrierbaren Kegeltrieb, wie an sich bekannt, verbunden wird. Motor und Getriebe bilden so eine sehr kompakte und fahrzeugfreundliche Antriebseinheit.

Die in der Getriebeausführung nach Figur 9 dargestellte Verzweigungsgetriebekombination zeichnet sich dadurch aus, daß das Summierungsplanetengetriebe 210 zwischen der zweiten Planetengetriebestufe 11 und dem Kupplungspaket 12 gelagert ist. Das Summierungsplanetengetriebe 210 besteht aus zwei verschiedenen auf einem Steg 32 gelagerten Planetenrädern 52 und 53, wobei die erste Welle, Hohlrad 30 und die zweite Welle, Sonnenrad 31 mit dem Planetenrad 52 ineinandergreifen, die dritte Welle des Summierungsgetriebes der Steg 32 bildet und die vierte Welle als Sonnenrad 33 in das Planetenrad 53 eingreift. Über die Stirnradstufe 62 wird die Antriebswelle 2 mit der ersten Welle 30 des Summierungsplanetengetriebes und über die Stirnradstufe 61 die zweite Hydrostateinheit B mit der zweiten Welle, dem Sonnerad 31 des Summierungsplanetengetriebes, sowie das Sonnenrad 26a mit der zweiten Planetengetriebestufe 11 verbunden. Die erste Hydrostateinheit A wird mit der Antriebswelle 2 über die Stirnradstufe 63 gekoppelt.

Die durchgehende Antriebswelle 2 bei Getriebeausführung nach Figur 9 bietet den weiteren Vorteil, insbesondere bei Anwendung für Arbeitsmaschinen, besonders für Schlepper, daß am Wellenende 2b die Zapfwelle angeschlossen werden kann sowie weitere Nebenan- bzw. Abtriebe.

Die Getriebeausführungen nach den Figuren 7, 8 und 9 können auch als Zweibereichsgetriebe ausgeführt werden, entsprechend den Drehzahlplänen nach Figur 4 und 5.

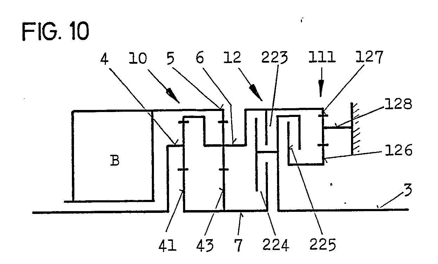

In Figur 10 ist eine Getriebekombination dargestellt für ein Zweibereichsgetriebe, d.h. mit zwei hydromechanischen Vorwärts- und einem hydromechanischen Rückwärtsbereich. Das Summierungsplanetengetriebe 10 ist hierbei mit seiner dritten Welle, dem Steg 6 mit dem Hohlrad 127 der zweiten Planetengetriebestufe 111 verbunden. Die zweite Planetengetriebestufe 111 ist an der Abtriebsseite des Getriebes angeordnet. Das Sonnenrad 126 des zweite Planetengetriebes 111 ist über die Kupplung 226 mit der Abtriebswelle 3 verbindbar. Das Kupplungspaket 12 ist also zwischen Summierungsplanetengetriebe 10 und dem zweite Planetengetriebe 111 gelagert. Diese Ausführungsform ist besonders von Vorteil für Fahrzeuge, die im Verhältnis zur Vorwärtsfahrgeschwindigkeit relativ hohe Rückfahrgeschwindigkeiten fordern, wie dies z.B. für Arbeitsmaschinen, wie Schlepper und Radlader der Fall ist.

Wie in all den Ausführungsbeispielen dargestellt, zeichnet sich dieses Getriebesystem durch eine sehr hohe Flexibilität hinsichtlich den vielfältigen Einbaubedingungen und auch den Betriebsbedingungen durch wahlweise Ausbildung als Zweibereichsgetriebe mit und ohne Bereichsspreizung oder Dreibereichsgetriebe aus. Die einzelnen Baugruppen und Bauteile sind technisch einfach herzustellen und lassen sich hinsichtlich Montage- und Servicefreundlichkeit sehr vorteilhaft zu einzelnen Baugruppen im Sinne einer Modulbauweise kombinieren.

## Patentansprüche

1. Stufenloses hydrostatisch-mechanisches Verzweigungsgetriebe für Kraftfahrzeuge mit einem ersten hydrostatischen, einem zweiten und dritten hydrostatischmechanischen Schaltbereich, bei dem das Hydrostatgetriebe (9) aus einer ersten Hydrostateinheit (A) und einer zweiten Hydrostateinheit (B) besteht, dem ein Summierungsplanetengetriebe (10; 110; 210) als vierwelliges Planetengetriebe zugeodnet ist, und die erste Welle (Steg 4, Hohlrad 30) des Summierungsplanetengetriebes mit der Antriebswelle (2) und der ersten Hydrostateinheit (A) verbunden ist, die zweite Welle (Hohlrad 5; Sonnenrad 31) des Summierungsplanetengetriebes mit der zweiten Hydrostateinheit (B) des Hydrostatgetriebes ständig verbunden ist, und die dritte Welle (Steg 6, 32) und vierte welle (7) des Summierungsplanetengetriebes mit der Abtriebswelle (3) verbindbar ist, dadurch gekennzeichnet, daß

(a) ein zweites Planetengetriebe als dreiwelliges Planetengetriebe (11; 111) vorgesehen ist, wobei die erste Welle (Sonnenrad 26a) des dreiwelligen, vorzugsweise mit Sonnenrad (26a) und Hohlrad (27) ausgebildeten Planetengetriebes (11) mit der zweiten welle (5; 31) des Summierungsplanetengetriebes (10; 110; 210) und der zweiten Hydrostateinheit (B) ständig verbunden ist,

(b) durch Schließen einer Bremse bzw. Kupplung (25) das dreiwellige Planetengetriebe (11; 111) mit der Abtriebswelle (3) in Triebverbindung gebracht wird,

(c) wenigstens zwei Kupplungen (23, 24 bzw. 123, 224) dem Summierungsplanetengetriebe nachgeordnet sind, und ein gemeinsames Kupplungspaket mit einem, mit der Abtriebswelle (3) verbundenen gemeinsamen Kupplungsglied bilden, und

(d) daß das mit der zweiten Hydrostateinheit (B) verbundene Glied (Sonnenrad 26a) des zweiten Planetengetriebes (11) bzw. die zweite Welle (5; 51; 31) des Summierungsplanetengetriebes (10; 110; 210) im hydrostatischen Vorwärtsfahrbereich gegenüber der ersten Welle (4; 30) des Summierungsplanetengetriebes (10; 110; 210) im hydrostatischen Vorwärtsfahrbereich gegenüber der ersten Welle (4; 30) des Summierungsplanetengetriebes gegensinnige Drehrichtung und am Ende des zweiten Schaltbereichs (hydrostatischmechanischer Schaltbereich) gleichsinnige Drehrichtung aufweist (Fig. 1, 2).

2. Stufenloses hydrostatisch-mechanisches Verzweigungsgetriebe für Kraftfahrzeuge mit einem ersten und einem zweiten hydrostatischmechanischen Schaltbereich, bei dem das Hydrostatgetriebe (9) aus einer ersten Hydrostateinheit (A) und einer zweiten Hydrostateinheit (B) besteht, dem ein Summierungsplanetengetriebe (10; 110; 210) als vierwelliges Planetengetriebe zugeordnet ist, und die erste Welle (Steg 4, Hohlrad 30) des Summierungsplanetengetriebes mit der Antriebswelle (2) und der zweiten Hydrostateinheit (A) verbunden ist, die zweite Welle (Hohlrad 5; Sonnenrad 31) des Summierungsplanetengetriebes mit der zweiten Hydrostateinheit (B) des Hydrostatgetriebes (9) ständig verbunden ist, und die dritte Welle (Steg 6, 32) und vierte Welle (7) des Summierungsplanetengetriebes mit der Abtriebswelle (3) verbindbar ist, und bei dem eine Spreizung des ersten Vorwärtsfahrbereiches und eines Rückwärtsfahrbereiches biz zu einem Übersetzungspunkt "X" (Fig. 3) vorgesehen ist, dadurch gekennzeichnet, daß ein zweites Planetengetriebe als dreiwelliges Planetengetriebe (11; 111) vorgesehen ist, wobei die erste Welle (Sonnenrad 26 bzw. Hohlrad 127) des dreiwelligen Planetengetriebes (11; 111) mit der dritten Welle (Steg 6; 32) des Summierungsplanetengetriebes (10; 110; 210) verbunden ist, und daß durch Schließen einer Bremse bzw. Kupplung (25, 225) das dreiwellige Planetengetriebe (11; 111) mit der Abtriebswelle (3) in Triebverbindung gebracht wird.

3. Verzweigungsgetriebe nach Anspruch 1, dadurch gekennzeichnet, daß das Summierungsplanetengetriebe (10; 110) so ausgelegt ist, daß im Anfahrzustand und geschlossener Kupplung (123) des ersten Schaltbereichs oder der Kupplung (125) des Rückwärtsbereichs die erste Hydrostateinheit (A) auf ihre maximale negative Verstellgröße ausgestellt ist und die zweite Hydrostateinheit vorzugweise konstanten Volumens bei Fahrgeschwindigkeit "Null" über die zweite Welle (5; 31) des Summierungsplanetengetriebes (10; 110) angetrieben wird mit einer Drehzahl, die wesentlich größer ist, als die Drehzahl der ersten verstellbaren Hydrostateinheit (A) und diese zweite Hydrostateinheit (B) folglich eine wesentlich größere Ölmenge fördert, als die erste Hydrostateinheit (A) maximal bei den gegebenen Drehzahlverhältnissen aufnehmen kann und die Mehrförderung der zweiten Hydrostateinheit (B) über eine Art Bypaßventil auf die Saug- bzw. Niederdruckseite des Hydrostatkreislkufs gebracht wird.

4. Verzweigungsgetriebe nach Anspruch 2 und 3, dadurch gekennzeichnet, daß ein Bypaßventil (29) bei der entsprechenden Ausführung vorgesehen ist, das zwischen Hochdruckleitung und Niederdruckleitung (8) des Hydrostatkreislaufs geschaltet ist.

5. Verzweigungsgetriebe nach Anspruch 2 bis 4, dadurch gekennzeichnet, daß das Bypaßventil über ein Signal (15) angesteuert wird, das ein bremsabhängiges Signal oder/und ein Drehzahlsignal z.B. aus Antriebsdrehzahl oder/und ein lastabhängiges Signal z.B. aus dem Hochdruck des Hydrostatkreislaufes ist.

6. Verzweigungsgetriebe nach Anspruch 2 bis 5, dadurch gekennzeichnet, daß das Summierungsplanetengetriebe (10; 110) so ausgelegt ist, daß bei geschlossenem Bypaßventil (29), geschaltetem ersten Bereich durch Schließen der Kupplung (123) bzw. geschaltetem Rückwärtsbereich (125) bei gleichzeitig maximaler Regelstellung der Hydrostateinheit A sich eine Getriebeübersetzung (X) einstellt, die einer Mindestgeschwindigkeit des Fahrzeugs entspricht.

7. Verzweigungsgetriebe nach Anspruch 1 bis 6, dadurch gekennzeichnet, daß das vierwellige Summierungsplanetengetriebe (10) aus einer ersten und einer zweiten Planetengetriebestufe besteht und die erste Welle des Summierungsplanetengetriebes (10) den Steg (4) der ersten Planetengetriebestufe, die zweite Welle (5) das Hohlrad der zweiten Planetengetriebestufe, die dritte Welle (6) den Steg der zweiten Planetengetriebestufe, der gleichzeitig mit dem Hohlrad der ersten Planetengetriebestufe verbunden ist, bildet und die vierte Welle (7) mit beiden Sonnenrädern beider Planetengetriebstufen verbunden ist.

8. Verzweigungsgetriebe nach Anspruch 1 bis 7, dadurch gekennzeichnet, daß das Summierungsplanetengetriebe (110) nach Fig. 5a, aus einer ersten und einer zweiten Planetengetriebestufe besteht und die erste Welle des Summierungsplanetengetriebes (110) mit dem Steg (46) der ersten Planetengetriebestufe und dem Hohlrad (50) der zweiten Planetengetriebestufe verbunden, die zweite Welle (5) mit dem Sonnenrad (51) der zweiten Planetentriebstufe, die dritte Welle (6) sowohl mit dem Steg (49) der zweiten Planetengetriebstufe als auch dem Hohlrad (48) der ersten Planetengetriebstufe verbunden ist und die vierte Welle (7) mit dem Sonnenrad (47) in Triebverbindung steht.

9. Verzweigungsgetriebe nach Anspruch 1 bis 8, dadurch gekennzeichnet, daß das Summierungsplanetengetriebe (210) nach Fig. 9 als Doppelplanetengetriebe ausgeführt ist, wobei zwei ineinandergreifende Planetenräder (52, 53) auf einem gemeinsamen Steg (32) angeordnet sind, ein Planetenrad (52) in das Hohlrad (30) der ersten Welle des Summierungsplanetengetriebes und in das Sonnenrad (31) der zweiten Welle des Summierungsplanetengetriebes und das zweite Planetenrad (53) mit dem Sonnenrad (33) der vierten Welle eingreift, und der Steg (32) die dritte Welle des Summierungsplanetentriebes (210) darstellt.

10. Verzweigungsgetriebe nach einem der Ansprüche 1 bis 9, dadurch gekennzeichnet, daß das Summierungsplanetengetriebe (10; 110; 210), das dreiwellige Planetengetriebe (11; 111) und das Kupplungspaket (12; 112) mit wenigstens zwei Kupplungen (23, 24, 123; 124) hintereinander in aufgezählter Reihenfolge angeordnet sind (Fig. 1, 3, 5a, 6).

11. Verzweigungsgetriebe nach Anspruch 1, dadurch gekennzeichnet, daß alle Zahn-Hohlräder (48; 50; 27), Sonneräder (47; 51) und Planetenräder des Summierungsplanetengetriebes (110) und des zweiten Planetengetriebes (111) jeweils gleiche Zähnezahlen besitzen (Fig. 5a).

12. Verzweigungsgetriebe nach einem der Ansprüche 1 bis 11, dadurch gekennzeichnet, daß das Summierungsplanetengetriebe (10; 110; 210) und das Kupplungspaket (12) unmittelbar hintereinander angeordnet sind, und das zweite Planetengetriebe (11; 111) räumlich danach und das Hydrostatgetriebe (9) parallel versetzt angeordnet ist (Fig. 7, 8, 9).

13. Verzweigungsgetriebe nach einem der Ansprüche 1 bis 12, dadurch gekennzeichnet, daß das zweite Planetengetriebe (11), das Summierungsplanetengetriebe (210) und das Kupplungspaket (12) koaxial hintereinander angeordnet sind.

14. Verzweigungsgetriebe nach einem der Ansprüche 1 bis 13, dadurch gekennzeichnet, daß das Hydrostatgetriebe (9), das Summierungsplanetengetriebe (10; 110) und das Kupplungspaket (12) koaxial zueinander angeordnet sind (Fig. 1, 3, 5a).

15. Verzweigungstriebe nach einem der Ansprüche 1 bis 14, dadurch gekennzeichnet, daß das Hydrostatgetriebe (9) koaxial zur Antriebswelle (2) und das Summierungsplanetengetriebe (10), das zweite Planetengetriebe (11) und das Kupplungspaket (12) parallel dazu versetzt angeordnet sind, die Antriebswelle über die Stirnradstufe (54) mit der ersten Welle des Summierungsplanetengetriebes und die Hydrostateinheit (B) über die Stirnradstufe (55) mit der zweiten Welle des Summierungsplanetengetriebes (10) verbunden ist, und die Abtriebswelle (3) über eine weitere Stirnradstufe (56) unmittelbar mit dem Achsdifferential (57) in Treibverbindung steht (Fig. 6).

16. Verzweigungsgetriebe nach einem der Ansprüche 1 bis 15, dadurch gekennzeichnet, daß das Hydrostatgetriebe (9) und die Verzweigungsgetriebekomponenten (10, 11, 111) parallel zueinander achsversetzt angeordnet sind, die Antriebswelle (2) über eine Stirnradstufe (34) mit der ersten Hydrostateinheit (A) verbunden ist, über eine zweite Stirnradstufe (35) eine Triebverbindung zwischen der Antriebswelle (2) und dem Summierungsplanetengetriebe (10) hergestellt ist, und die Abtriebswelle (3a) über eine Stirnradstufe (36, 36a) mit der Kupplungswelle oder über ein nicht dargestelltes Hohlrad, das in das Zahnrad (36) zur gleichzeitigen Drehzahlumkehr eingreift und unmittelbar mit der Abtriebswelle (3) verbunden ist (Fig. 7).

17. Verzweigungsgetriebe nach einem der Ansprüche 1 bis 16, dadurch gekennzeichnet, daß zwischen dem Kupplungspaket (12) und dem zweiten Planetengetriebe (11) ein zusätzliches Planetengetriebe (13) zur Anpassung der Abtriebsdrehzahl angeordnet ist (Fig. 8).

18. Verzweigungsgetriebe nach einem der Ansprüche 1 bis 17, dadurch gekennzeichnet, daß die Antriebswelle (2) zum Hydrostatgetriebe (9) und die Verzweigungsgetriebekomponenten (11, 12, 210) parallel versetzt angeordnet ist und von je einer Seite des Getriebes zwei Antriebsanschlüsse aufweist (Fig. 9).

19. Verzweigungsgetriebe nach einem der Ansprüche 1 bis 18, dadurch gekennzeichnet, daß die Abtriebswelle (3) mit einem Winkeltrieb verbunden ist, und der Antriebsmotor unmittelbar am abtriebsseitigen Antriebsanschluß (2b) anschließt, so daß das gesamte Antriebspaket, bestehend aus Motor und Getriebe, eine Antriebseinheit in Queranordnung darstellt, und der Getriebeausgang rechtwinklig versetzt in der Nähe des Motorflänsches liegt, so daß in an sich bekannter Weise ein nahezu unmittelbarer Eintrieb in das Achsdifferential der Triebachse erfolgen kann (Fig. 9).

20. Verzweigungsgetriebe nach einem der Ansprüche 1 bis 19, dadurch gekennzeichnet, daß die dritte Welle (Steg 6) des Summierungsplanetengetriebes (10) mit dem Hohlrad (127) des zweiten Planetengetriebes (111) verbunden ist, und das Sonnenrad (126) über die Kupplung (255) mit der Abtriebswelle (3) verbindbar ist (Fig. 10).

21. Verzweigungsgetriebe nach einem der Ansprüche 1 bis 20, dadurch gekennzeichnet, daß die einzelnen Bausteine, nämlich das Hydrostatgetriebe (9), das Summierungsplanetengetriebe (10, 110, 210), das zweite Planetengetriebe (11, 111) und das Kupplungspaket (12), im Sinne einer service- und montagefreundlichen Modulbausweise als separate Baugruppe ausgebildet sind.

22. Verzweigungsgetriebe nach einem der Ansprüche 1 bis 21, dadurch gekennzeichnet, daß die Baugruppen (10, 11, 12 bzw. 10, 111, 12 bzw. 111, 110, 12) eine gemeinsame Montageeinheit bilden.

**Revendications**

1. Transmission hydrostatique-mécanique à dérivation de puissance et à réglage continu pour véhicules à moteur, comprenante un premier régime de changement de vitesse, un deuxième et un troisième régime de changement de vitesse hydrostatique, dans laquelle la transmission hydrostatique (9) se compose d'une première unité hydrostatique (A) et une deuxième unité hydrostatique (B), à laquelle transmission est associé un jeu d'engrenages intégrant (10; 110; 210) sous forme d'un engrenage planétaire à quatre arbres, et dont le premier arbre (porte-pignons 4; couronne de train planétaire 30) dudit engrenage planétaire intégrant est relié à l'arbre d'entrée (2) et à la première unité hydrostatuque (A), lè deuxième arbre (couronne de train planétaire 5; roue solaire 31) de l'engrenage planétaire intégrant se trouvant en raccord permanent à la deuxième unité hydrostatique (B) de la transmission hydrostatique, et le troisième arbre (porte-pignons 6, 32) et le quatrième arbre (7) de l'engrenage planétaire intégrant étant pourvous pour être raccordés à l'arbre de sortie (3), caractérisée en ce

(a) qu'un deuxième engrenage planétaire est pourvu sous forme d'un train planétaire à trois arbres (11; 111), le premier arbre (roue solaire 26a) de l'engrenage planétaire à trois arbres (11), muni de préférence d'une roue solaire (26a) et d'une couronne de train planétaire (27), se trouvant en raccord permanent au deuxième arbre (5; 31) dudit engrenage planétaire intégrant (10; 110; 210) et à la deuxième unité hydrostatique (B).

(b) qu'en fermant un frein ou embrayage (25), respectivement, on établit la liaison motrice entre l'engrenage planétaire à trois arbres (11; 111) et l'arbre de sortie (3),

(c) qu'au moins deux embrayages (23, 24 ou 123, 224, respectivement) sont disposés en aval de l'engrenage planétaire intégrant et constituent un groupe d'accouplement paqueté commun muni d'un organe d'accouplement commun relié à l'arbre de sortie (3), et

(d) en ce que ledit élément (roue solaire 26a) du deuxième engrenage planétaire (11) relié à la deuxième unité hydrostatique (B) ou le deuxième arbre (5; 51; 31) de l'engrenage intégrant (10; 110; 210), respectivement, présente, en régime de marche avant hydrostatique, un sens de rotation opposé au sens du premier arbre (4; 30) de l'engrenage planétaire intégrant (10; 110; 210), et, à la limite du deuxième régime de changement de vitesse hydrostatique-mécanique, le même sens de rotation (Fig. 1, 2).

2. Transmission hydrostatique-mécanique à dérivation de puissance et à réglage continu pour véhicules à moteur à un premier et un deuxième régime de changement de vitesse hydrostatique-mécanique, dans laquelle la transmission hydrostatique (9) se compose d'une première unité hydrostatique (A) et d'une deuxième unité hydrostatique (B), à laquelle transmission (9) est associé un jeu d'engrenages planétaires intégrant (10; 110; 210) sous forme d'un engrenage planétaire à quatre arbres, et dont le premier arbre (porte-pignons 4; couronne de train planétaire 30) dudit engrenage planétaire intégrant est relié à l'arbre d'entrée (2) et à la première unité hydrostatique (A), la deuxième arbre (couronne de train planétaire 5; roue solaire 31) de l'engrenage planétaire intégrant se trouvant en raccord permanent à la deuxième unité hydrostatique (B) de la transmission hydrostatique (9), et le troisième arbre (porte-pignons 6, 32) et le quatrième arbre (7) de l'engrenage planétaire intégrant étant pourvous pour être raccordés à l'arbre de sortie (3), et dans laquelle il y à un élargissement du premier régime de marche en avant et d'un régime de marche arrière jusqu'à un point "X" de rapport de changement de vitesse (Fig. 3), caractérisée en ce qu'un deuxième engrenage planétaire est pourvu sous forme d'un engrenage planétaire à trois arbres (11; 111), le premier arbre (roue solaire 26 ou couronne de train planétaire 127) de l'engrenage planétaire à trois arbres (11; 111) se trouvant en raccord au troisième arbre (porte-pignons 6; 32) dudit engrenage planétaire intégrant (10; 110; 210), et en ce qu'en fermant un frein ou embrayage (25, 225), respectivement on établit la liaison motrice entre l'engrenage planétaire à trois arbres (11; 111) et l'arbre de sortie (3).

3. Transmission à dérivation de puissance selon la Revendication 1, caractérisée en ce que ledit jeu d'engrenages planétaires intégrant (10; 110) est si conçu qu'au démarrage et à embrayage fermé (123) du premier régime de changement de vitesse ou à embrayage fermé (125) du régime de marche arrière, ladite première unité hydrostatique (A) soit portée à sa limite de réglage négatif maximale pendant qu'à la vitesse "zéro" du véhicule, la deuxième unité hydrostatique, de préférence à volume constant, soit entraînée par le deuxième arbre (5; 31) de l'engrenage planétaire intégrant (10; 110) à une vitesse essentiellement supérieure à la vitesse de la première unité hydrostatique réglable (A), et en ce que ladite deuxième unité hydrostatique (B) donc refoule une quantité d'huile essentiellement plus grande que la capacité d'absorption maximale de la première unité hydrostatique (A) aux conditions de vitesses de rotation données, la quantité supplémentairement refoulée par la deuxième unité hydrostatique (B) étant dirigée, par des moyens du genre d'un clapet de dérivation, au côté d'aspiration ou de basse pression, respectivement, du circuit hydrostatique.

4. Transmission à dérivation de puissance selon les Revendications 2 et 3, caractérisée en ce qu'à la réalisation appropriée, un clapet de dérivation (29) est pourvu qui est branché entre la conduite de haute pression et la conduite de basse pression (8) du circuit hydrostatique.

5. Transmission à dérivation de puissance selon les Revendications 2 à 4, caractérisée en ce que ledit clapet de dérivation est commandé par un signal (15) qui est un signal dépendant du freinage ou/et un signal représentatif de la vitesse, dérivé par exemple de la vitesse d'entraînement, ou/et un signal en fonction de la charge dérivé, par exemple, de la haute pression du circuit hydrostatique.

6. Transmission à dérivation de puissance selon les Revendications 2 à 5, caractérisée en ce que ledit jeu d'engrenages planétaires intégrant (10; 110) est si conçu qu'à fermeture dudit clapet de dérivation (29) et au premier régime de vitesse enclenché en fermant ledit embrayage (123) ou au régime de marche arrière (125) enclenché à position de réglage maximal simultané de l'unité hydrostatique A, il s'établisse un rapport de changement de vitesse (X) qui correspond à une vitesse minimale du véhicule.

7. Transmission à dérivation de puissance selon les Revendications 1 à 6, caractérisée en ce que ledit engrenage planétaire intégrant à quatre abres (10) est constitué par un premier et un deuxième étage d'engrenage planétaire, pendant que le premier arbre de l'engrenage planétaire intégrant (10) constitue le porte-pignons (4) du premier étage d'engrenage planétaire, le deuxième arbre (5) constitue la couronne de train planétaire du deuxième étage d'engrenage planétaire, le troisième arbre (6) constitue la porte-pignons du deuxième étage d'engrenage planétaire lequel porte-pignons est, en même temps, raccordé à la couronne de train planétaire du premier étage d'engrenage planétaire, et que le quatrième arbre (7) est raccordé aux deux roues solaires des deux étages d'engrenage planétaire.

8. Transmission à dérivation de puissance selon les Revendications 1 à 7, caractérisée en ce que ledit engrenage planétaire intégrant (110) selon la Fig. 5a est constitué par un premier em un deuxième étage d'engrenage planétaire, et en ce que le premier arbre dudit engrenage planétaire intégrant (110) est raccordé au porte-pignons (46) du premier étage d'engrenage planétaire et la couronne de train planétaire (50) du deuxième étage d'engrenage planétaire, que le deuxième arbre (5) est raccordé à la roue solaire (51) du deuxième étage d'entraînement planétaire, que le troisième arbre (6) est raccordé à la fois au porte-pignons (49) du deuxième étage d'engrenage planétaire et à la couronne de train planétaire (48) du premier étage d'engrenage planétaire, pendant que le quatrième arbre (7) se trouve en liaison motrice avec la roue solaire (47).

9. Transmission à dérivation de puissance selon les Revendications 1 à 8, caractérisée en ce que ledit jeu d'engrenages planétaires intégrant (210) selon la Fig. 9 est réalisé en tant qu'un engrenage planétaire de boîte à vitesses composite dans lequel deux pignons satellites engrenants (52, 53) sont disposés sur un porte-pignons (32) commun, dont un pignon satellite (52) engrenant dans la couronne de train planétaire (30) du premier arbre de l'engrenage planétaire intégrant et dans la roue solaire (31) du deuxième arbre de l'engrenage planétaire intégrant, pendant que le deuxième pignon satellite (53) s'engrène dans la roue solaire (33) du quatrième arbre, et en ce que le porte-pignons (32) est le troisième arbre de l'engrenage planétaire intégrant (210).

10. Transmission à dérivation de puissance selon quelconque des Revendications 1 à 9, caractérisée en ce que l'engrenage planétaire intégrant (10; 110; 210), l'engrenage planétaire à trois arbres (11; 111) et le groupe d'accouplement paqueté (12; 112) à au moins deux embrayages (23, 24; 123, 124) sont disposés en tandem dans la succession énumérée (Fig. 1, 3, 5a, 6).

11. Transmission à dérivation de puissance selon la Revendication 1, caractérisée en ce que chacun de toutes les couronnes dentées de train planétaire (48; 50; 27), de toutes les roues solaires (47; 51) et de tous les pignons satellites dudit engrenage planétaire intégrant (110) et dudit deuxième engrenage planétaire (111) présente le même nombre de dents (Fig. 5a).

12. Transmission à dérivation de puissance selon quelconque des Revendications 1 à 11, caractérisée en ce que ledit jeu d'engrenages planétaires intégrant (10; 110; 210) et ledit groupe d'accouplement paqueté (12) sont disposés l'un directement derrière l'autre, que le deuxième engrenage planétaire (11; 11) les suit dans l'espace, et que la transmission hydrostatique (9) est disposé en déport parallèle (Fig. 7, 8, 9).

13. Transmission à dérivation de puissance selon quelconque des Revendications 1 à 12, caractérisée en ce que le deuxième engrenage planétaire (11), ledit engrenage planétaire intégrant (210) et ledit groupe d'accouplement paqueté (12) sont disposés en tandem coaxial.

14. Transmission à dérivation de puissance selon quelconque des Revendications 1 à 13, caractérisée en ce que la transmission hydrostatique (9), ledit engrenage planétaire intégrant (10; 110) et ledit groupe d'accouplement paqueté (12) sont disposées en relation coaxiale l'un relativement à l'autre.

15. Transmission à dérivation de puissance selon quelconque des Revendications 1 à 14, caractérisée en ce que la transmission hydrostatique (9) est disposé coaxialement relativement à l'arbre d'entrée (2) et que ledit engrenage planétaire intégrant (10), le deuxième engrenage planétaire (11), et le groupe d'accouplement paqueté (12) sont disposés en déport y parallèle, en ce que l'arbre d'entrée est raccordé, par l'étage d'engrenage droit (54), au premier arbre de l'engrenage planétaire intégrant, pendant que l'unité hydrostatique (B) est raccordé, par l'étage d'engrenage droit (55) au deuxième arbre de l'engrenage planétaire intégrant (10), et en ce que l'arbre de sortie (3) se trouve en liaison motrice directe, par un autre étage d'engrenage droit (56), avec le différentiel d'essieu (57) (Fig. 6).

16. Transmission à dérivation de puissance selon quelconque des Revendications 1 à 15, caractérisée en ce que la transmission hydrostatique (9) et les éléments de la transmission à dérivation de puissance (10, 11, 111) sont disposés en parallèle et en déport axial l'un relativement à l'autre, que l'arbre d'entrée (2) est raccordé, par un étage d'engrenage droit (34), à la première unité hydrostatique (A), qu'un deuxième étage d'engrenage droit (35) établit une liaison motrice entre l'arbre d'entrée et l'engrenage planétaire intégrant (10), et que l'arbre de sortie (3a) est raccordé à l'arbre d'embrayage par un étage d'engrenage droit (36, 36a) ou directement à l'arbre de sortie (3) par une couronne de train planétaire non illustrée engrenant dans la roue dentée (36) pour l'inversion simultanée de la vitesse de rotation (Fig. 7).

17. Transmission à dérivation de puissance selon quelconque des Revendications 1 à 16, caractérisée en ce qu'un engrenage planétaire supplémentaire (13) est branché entre ledit groupe d'accouplement paqueté (12) et le deuxième engrenage planétaire (11) pour l'adaptation de la vitesse de rotation de sortie (Fig. 8).

18. Transmission à dérivation de puissance selon quelconque des Revendications 1 à 17, caractérisée en ce que l'arbre d'entrée (2) est disposé en déport parallèle relativement à la transmission hydrostatique (9) et les éléments de la transmission à dérivation de puissance (11, 12, 210) et comprend deux moyens de raccordement d'entraînement d'un côté à la vois de la transmission (Fig. 9).

19. Transmission à dérivation de puissance selon quelconque des Revendications 1 à 18, caractérisée en ce que l'arbre de sortie (3) est raccordé à un système de commande par engrenage d'angle et que le moteur d'entraînement suit directement les moyens de raccordement d'entraînement (2b) au côté sortie d'une façon que l'ensemble d'accouplement paqueté, constitué par le moteur et la transmission, constitue un groupe d'entraînement transversal et que la sortie de la transmission se trouve en déport orthogonal au voisinage de la bride du moteur, de telle manière que d'une façon connue en soi un entraînement prèsque direct dans le différentiel de l'essieu moteur soit réalisable (Fig. 9).

20. Transmission à dérivation de puissance selon quelconque des Revendications 1 à 19, caractérisée en ce que le troisième arbre (porte-pignons 6) de l'engrenage planétaire intégrant (10) est raccordé à la couronne de train planétaire (127) du deuxième engrenage planétaire (111), et que la roue solaire (126) est pourvue pour être raccordée par l'embrayage (255) à l'arbre de sortie (3) (Fig. 10).

21. Transmission à dérivation de puissance selon quelconque des Revendications 1 à 20, caractérisée en ce que les sous-groupes individuels, c.à.d. la transmission hydrostatique (9), le jeu d'engrenages planétaires intégrant (10, 110, 210), le deuxième engrenage planétaire (11, 111) et le groupe d'accouplement paqueté (12) sont conçus sous forme d'un bloc modulaire séparé permettant une construction modulaire facile à entretenir et monter.

22. Transmission à dérivation de puissance selon quelconque des Revendications 1 à 21, caractérisée en ce que les blocs (10, 11, 12 ou 10, 11, 12 ou 111, 110, 12, respectivement) constituent une unité modulaire à montage combiné.

**Claims**

1. Branched infinetely variable hydromechanical transmission for motor vehicles, comprising a first hydrostatic speed range, a second and a third hydrostatic-mechanical speed range, wherein the hydrostatic transmission (9) consists of a first hydrostatic unit (A) and a second hydrostatic unit (B) with an associated compounding planetary gearing (10; 110; 210) designed as a four-shaft planetary gearing, wherein the first shaft (carrier 4, annular gear 30) of said compounding planetary gearing is connected to the input shaft (2) and said first hydrostatic unit (A), the second shaft (annular gear 5; sun wheel 31) of said compounding planetary gearing is permanently connected to the second hydrostatic unit (B) of said hydrostatic transmission, and the third shaft (carrier 6, 32) and a fourth shaft (7) of said compounding planetary gearing may be connected to the output shaft (3), characterized in that

(a) a second planetary gearing of a three-shaft planetary gearing design (11; 111) is provided, with the first shaft (sun wheel 26a) of said three-shaft planetary gearing (11), which is preferably designed to include a sun wheel (26a) and an annular gear (27), being permanently linked up with the second shaft (5; 31) of said compounding planetary gearing (10; 110; 210) and said second hydrostatic unit (B);

(b) said three-shaft planetary gearing (11; 111) may be linked up for driving connection with the output shaft (3) by application of a brake or clutch (25),

(c) at least two clutches (23, 24 or 123, 224, respectively) join the compounding planetary gearing in tandem relationship and cooperate with a common clutch element linked up with the output shaft (3) so as to constitute a combined packaged clutch assembly, and

(d) that the member (sun wheel 26a) of said second planetary gearing (11) or the second shaft (5; 51; 31) of said compounding planteary gearing (10; 110; 210), respectively, which is linked up with said second hydrostatic unit (B) rotates in a direction inverse to the rotation of the first shaft (4; 30) of said compounding planetary gearing (10; 110; 210) in the hydrostatic forward speed range while by the limit of the second speed range (hydrostatic-mechanical speed range) it rotates in the same direction (Figs. 1, 2).

2. Branched infinitely variable hydromechanical transmission for motor vehicles, comprising a first and a second hydrostatic-mechanical speed range, wherein the hydrostatic transmission (9) consists of a first hydrostatic unit (A) and a second hydrostatic unit (B) with an associated compounding planetary gearing (10; 110; 210) designed as a four-shaft planetary gearing, wherein the first shaft (carrier 4, annular gear 30) of said compounding planetary gearing is connected to the input shaft (2) and said first hydrostatic unit (A), the second shaft (annular gear 5, sun wheel 31) of said compounding planetary gearing is permanently connected to the second hydrostatic unit (B) of said hydrostatic transmission, and the third shaft (carrier 6, 32) and fourth shaft (7) of said compounding planetary gearing may be connected to the output shaft (3), and wherein provisions are made for spreading of the first forward speed range and a reverse speed range up to a transmission point "X" (Fig. 3), characterized in that a second planetary gearing designed as a three-shaft planetary gearing (11; 111) is provided, with the first shaft (sun wheel 26 or annular gear 127) of said three-shaft planetary gearing (11; 111) being linked up with the third shaft (carrier 6; 32) of said compounding planetary gearing (10; 110; 210), sand that by application of a brake or clutch (25; 225) said three-shaft planetary gearing (11; 111) is linked up in driving connection with said output shaft (3).

3. Branched transmission according to Claim 1, characterized in that said compounding planetary gearing (10; 110) is so designed that in the starting condition with the clutch (123) of said first speed range or the clutch (125) of said reverse speed range being applied, said first hydrostatic unit (A) is set to its maximum negative displacement limit and that at "zero" driving speed the second hydrostatic unit, preferably of a constant volume, is driven through the second shaft (5; 31) of said compounding planetary gearing (10; 110) at a speed essentially higher than the speed of said first adjustable hydrostatic unit (A) and that said second hydrostatic unit (B) thus delivers an oil quantity substantially greater than the maximum quantity which the first hydrostatic unit (A) can absorb at the prevailing speed conditions, and that the quantity additionally delivered by said second hydrostatic unit (B) is transferred through some kind of by-pass valve to the suction or low-pressure side of the hydrostatic circuit.

4. Branched transmission according to Claims 2 and 3, characterized in that with an appropriate design a by-pass valve (29) is provided which is branched between the high-pressure inlet and the low-pressure line (8) of the hydrostatic circuit.

5. Branched transmission according to Claims 2 to 4, characterized in that said by-pass valve is controlled by a signal (15) being a signal dependent on brake operation or/and a speed signal, derived, for instance, from the driving speed, or/and a load-dependent signal which is derived, for instance, from the high pressure of the hydrostatic circuit.

6. Branched transmission according to Claims 2 to 5, characterized in that said compounding planetary gearing (10; 110) is so designed that a transmission ratio (X) will be established which corresponds to a minimum driving speed of the vehicle, when said by-pass valve (29) is closed and the first speed range is selected by application of the clutch (123) or when the reverse speed range (125 is selected at simultaneous setting of the hydrostatic unit A at its maximum regulating position.

7. Branched transmission according to Claims 1 to 6, characterized in that said four-shaft compounding planetary gearing (10) consists of a first and a second planetary gear stage and that the first shaft of said compounding planetary gearing (10) forms the carrier (4) of said first planetary gear stage, that the second shaft (5) forms the annular gear of said second planetary gear stage, that the third shaft (6) constitutes the carrier of the second planetary gear stage and is linked up at the same time with the annular gear of said first planetary gear stage, and that the fourth shaft (7) is linked up with both sun wheels of both planetary gear stages.

8. Branched transmission according to Claims 1 to 7, characterized in that said compounding planetary gearing (110) according to Fig. 5a consists of a first and a second planetary gear stage, and that the first shaft of said compounding planetary gearing (110) is connected to the carrier (46) of said first planetary gear stage and to the annular gear (50) of said second planetary gear stage, that the second shaft (5) is connected to the sun wheel (51) of said second planetary gear stage, that the third shaft (6) is connected to both the carrier (49) of said second planetary gear stage and the annular gear (48) of said first planetary gear stage, while the fourth shaft (7) is linked up in driving connection with the sun wheel (47).

9. Branched transmission according to Claims 1 to 8, characterized in that said compounding planetary gearing (210) according to Fig. 9 is designed as a twin planetary gearing wherein two intermeshing planet pinions (52, 53) are disposed on a common carrier (32), with one planet pinion (52) being engaged with said annular gear (30) of said first shaft of the compounding planetary gearing and the sun wheel (31) of the second shaft of said compounding planetary gearing, and with the second planet pinion (53) being engaged with the sun wheel (33) of the fourth shaft, while said carrier (32) constitutes the third shaft of said compounding planetary, gearing (210).

10. Branched transmission according to any of Claims 1 to 9, characterized in that said compounding planetary gearing (10; 110; 210), said three-shaft planetary gearing (11; 111) and said packaged clutch assembly (12; 112) with at least two clutches (23, 24; 123, 124) are disposed in tandem relationship in the enumerated succession (Figs. 1, 3, 5a, 6).

11. Branched transmission according to Claim 1, characterized in that each of all toothed annular gears (48; 50; 27), all sun wheels (47, 51) and all planet pinions of said compounding planetary gearing (110) and of said second planetary gearing (11) presents the same number of teeth (Fig. 5a).

12. Branched transmission according to any of Claims 1 to 11, characterized in that said compounding planetary gearing (10; 110; 210) and said packaged clutch assembly (12) are disposed in immediate tandem relationship and that said second planetary gearing (11; 111) joins them in space while said hydrostatic transmission (9) is offset in parallel (Figs. 7, 8, 9).

13. Branched transmission according to any of Claims 1 to 12, characterized in that said second planetary gearing (11), said compounding planetary gearing (210), and said packaged clutch assembly (12) are disposed in coaxial tandem relationship.

14. Branched transmission according to any of Claims 1 to 13, characterized in that said hydrostatic transmission (9), said compounding planetary gearing (10; 110) and said packaged clutch assembly (12) are disposed in coaxial relationship relative to each other.

15. Branched transmission according to any of Claims 1 to 14, characterized in that said hydrostatic transmission (9) is coaxial with the input shaft (2) and that said compounding planetary gearing (10), said second planetary gearing (11), and said packaged clutch assembly (12) are staggered in parallel thereto, while the input shaft is linked up, through the spur wheel stage (54), to the first shaft of said compounding planetary gearing and said hydrostatic unit (B) is connected, through the spur wheel stage (55), to the second shaft of said compounding planetary gearing (10), and that the output shaft (3) is linked up, in driving connection, through a further spur wheel stage (56) with the axle differential gearing (57) directly (Fig. 6).

16. Branched transmission according to any of Claims 1 to 15, characterized in that said hydrostatic transmission (9) and the elements of the branched transmission (10, 11, 111) are axially staggered in parallel relative to each other, that a driving connection is established through a second spur wheel stage (35) between the input shaft (2) and the compounding planetary gearing (10), and that the output shaft (3a) is linked up either with the clutch spindle through a spur wheel stage (36, 36a) or with the output shaft (3) directly through a non-illustrated annular gear intermeshing with the toothed wheel (36) for simultaneous speed reversal (Fig. 7).

17. Branched transmission according to any of Claims 1 to 16, characterized in that an additional planetary gearing (13) is provided between the packaged clutch assembly (12) and said second planetary gearing (11) for adaptation of the output speed (Fig. 8).

18. Branched transmission according to any of Claims 1 to 17, characterized in that the input shaft (2) is disposed at a parallel offset from the hydrostatic transmission (9) and the elements of the branched transmission (11, 12, 210) and presents two gearing connector means at one side each of the transmission (Fig. 9).

19. Branched transmission according to any of Claims 1 to 18, characterized in that the output shaft (3) is linked up with angular drive means, and that the driving engine joins the gear connector means (2b) at the output side such that the entire packaged drive assembly including the engine and the transmission constitutes a transversely disposed drive unit, and that the transmission output is staggered orthogonally in the vicinity of the engine-mounting flange such that, in a manner known per se, an almost direct transmitting action to the axle differential of the driving axle may be established (Fig. 10).

20. Branched transmission according to any of Claims 1 to 19, characterized in that the third shaft (carrier 6) of said compounding planetary gearing (10) is linked up with the annular gear (127) of said second planetary gearing (111), and that the sun wheel (126) may be connected through the clutch (255) to the output shaft (3) (Fig. 10).

21. Branched transmission according to any of Claims 1 to 20, characterized in that the individual components, i.e. the hydrostatic transmission (9), the compounding planetary gearing (10, 110, 210), the second planetary gearing (11, 111) and the packaged clutch assembly (12) are designed as separate modular assemblies so as to allow for a modular design easy to service and assemble.

22. Branched transmission according to any of Claims 1 to 21, characterized in that the modular assemblies (10, 11, 12 or 10, 111, 12 or 111, 110, 12, respectively) constitute one combined assembly unit.

FIG. 1

1    9    4    10    5    6    11    25    12    23    24    7    3    26a    45    44

27

A    B

19    41    43    42    28    27

FIG. 2

R    B1    B2    B3

A

B

1

n    0

-1

0    0,3    1    1/$_i$

FIG. 3

FIG. 4

# FIG. 5

# FIG. 5a

FIG. 6

FIG. 7

FIG. 8

FIG.9

FIG. 10